# EUROPÄISCHE PATENTSCHRIFT

(11) **EP 1 288 537 B1**
(45) Veröffentlichungstag und Bekanntmachung des Hinweises auf die Patenterteilung: **03.01.2007**
(21) Anmeldenummer: 02008889.4
(22) Anmeldetag: 20.04.2002
(51) Int. Cl.: F16J 15/32

(54) **Dichtring**
Seal ring
Anneau d'étanchéité

(30) Priorität: 24.08.2001 DE 10140681
(43) Veröffentlichungstag der Anmeldung: 05.03.2003
(73) Patentinhaber: Carl Freudenberg KG, 69469 Weinheim (DE)
(72) Erfinder: Klenk, Thomas, 69214 Eppelheim (DE); Schreiner, Peter, 67117 Limburgerhof (DE); Bock, Eberhard, Dr., 69509 Mörlenbach (DE); Wetzel, Stephan, 69517 Gorxheimertal (DE)

(56) Entgegenhaltungen:
- DE-C- 864 344
- FR-A- 1 024 718
- US-A- 2 743 951
- US-A- 4 344 631
- US-A- 5 104 603
- US-A- 5 326 112
- SHIOMI S, UCHIYAMA K: "SEAL HANDLES HIGH ECCENTRICITY AND SPEED" MITSUBISHI SURVEY , Juli 1993 (1993-07), Seiten 28-30, XP000389836 SUTTON, SURREY, GB

## Beschreibung

Die Erfindung betrifft einen Dichtring, umfassend eine Dichtmanschette aus elastomerem Werkstoff mit zumindest einer Dichtlippe zur Abdichtung eines abzudichtenden Raums, wobei die Dichtmanschette mit einem Versteifungsring aus zähhartem Werkstoff verbunden ist, dessen weiter Merkmale im einleitenden Teil des Patentanspruchs 1 aufgeführt sind.

Aus US-A -2743951 ist ein Dichtring der vortesehend genannten Art bekannt.

Weiterhin sind Dichtringe allgemein bekannt und gelangen beispielsweise als Radialwellendichtringe zur Anwendung. Die Dichtmanschette und der Versteifungsring sind dabei miteinander vulkanisiert, wobei die Dichtmanschette im Bereich der Dichtlippe in radialer Richtung flexibel ist. Vor allem bei Radialwellendichtringen mit axial kurzer Dichtmanschette zum Abdichten druckbeaufschlagter Medien ist die vergleichsweise geringe Flexibilität/große Steifigkeit für viele Anwendungen wenig zufriedenstellend, da beispielsweise Unwuchten des abzudichtenden Maschinenelements und/oder betriebsbedingter Verschleiß der Dichtlippe nur unzureichend durch den Dichtring kompensiert werden können. Zum teilweisen Ausgleich dieses konstruktiven Mangels werden die üblichen Dichtringe mit vergleichsweise großer radialer Überdeckung eingebaut, d.h. die Dichtlippe hat herstellungsbedingt einen deutlich kleineren Durchmesser als die Oberfläche des abzudichtenden Maschinenelements. Eine solche große radiale Überdeckung führt jedoch zu einem hohen Reibmoment während des Betriebs und zu einem unerwünscht frühzeitigen Verschleiß der Dichtlippe.

Der Erfindung liegt die Aufgabe zugrunde, einen Dichtring der eingangs genannten Art derart weiterzuentwickeln, dass dieser verbesserte Gebrauchseigenschaften während einer verlängerten Gebrauchsdauer aufweist. Insbesondere soll das Reibmoment zwischen der Dichtmanschette und dem abzudichtenden Maschinenelement reduziert werden. Exzentrizitäten und/oder Unwuchten des abzudichtenden Maschinenelements sollen durch einen vergrößerten Bewegungsspielraum der Dichtlippe besser ausgeglichen werden. Ferner soll der Dichtring in fertigungstechnischer und wirtschaftlicher Hinsicht einfacher und kostengünstiger herstellbar sein.

Diese Aufgabe wird erfindungsgemäß durch einen Dichtring gemäß Anspruch 1 gelöst. Auf vorteilhafte Ausgestaltungen nehmen die Unteransprüche Bezug.

Bei dem Dichtring nach der Erfindung ist die Dichtmanschette, im Längsschnitt des Dichtrings betrachtet, im Wesentlichen C-förmig ausgebildet und axial in Richtung des abzudichtenden Raums offen. Ferner umfaßt der Dichtring einen radial äußeren und einen radial inneren Axialschenkel. Die Axialschenkel sind auf der dem abzudichtenden Raum axial abgewandten Seite durch einen Radialschenkel verbunden. Der äußere Axialschenkel ist nur auf der dem abzudichtenden Raum axial zugewandten Seite mit dem Versteifungsring verbunden ist und die Außenumfangsfläche des äußeren Axialschenkels und die dem abzudichtenden Raum axial abgewandte Stirnseite des Radialschenkels sind einem Stützring ungehaftet zugeordnet. Durch eine solche Ausgestaltung hat die Dichtlippe, bezogen auf Dichtringe, bei denen die Dichtlippe in unmittelbarer Nähe des Versteifungsrings angeordnet und durch Vulkanisation mit diesem verbunden ist, einen vergleichsweise großen Bewegungsspielraum, insbesondere in radialer Richtung, um Exzentrizitäten des abzudichtenden Maschinenelements und/oder Unwuchten ausgleichen zu können. Außerdem ist durch die ungehaftete Zuordnung des äußeren Axialschenkels und des Radialschenkels zum Stützring und durch den daraus resultierenden größeren Bewegungsspielraum das Reibmoment zwischen der Dichtlippe und dem abzudichtenden Maschinenelement reduziert, was im Hinblick auf gute Gebrauchseigenschaften während einer sehr langen Gebrauchsdauer von hervorzuhebendem Vorteil ist; der abrasive Verschleiß der Dichtlippe, bezogen auf den zuvor beschriebenen Dichtring aus dem Stand der Technik, ist wesentlich reduziert. Durch diese vorteilhaften Gebrauchseigenschaften ist der erfindungsgemäße Dichtring besonders gut geeignet, auch höhere Drücke abzudichten. Gelangt der Dichtring beispielsweise als Pumpendichtung zur Anwendung, können beispielsweise Pumpendrücke von bis zu 150 bar problemlos abgedichtet werden.

Durch das reduzierte Reibmoment ist zwangsläufig die Wärmeentwicklung vergleichsweise gering, ebenso wie die Wärmeübertragung auf das abzudichtende Medium, das beispielsweise durch ein Getriebe- oder Hydrauliköl gebildet ist. Die geringe Wärmeübertragung auf das abzudichtende Medium wirkt sich positiv auf die Alterung des abzudichtenden Mediums und/oder die Zersetzung der Additive aus, die im abzudichtenden Medium enthalten sind

Die Dichtlippe wird ferner durch zwei einander durchschneidende Kegelflächen gebildet, wobei der erste Kegelwinkel, den die dem abzudichtenden Raum abgewandte erste Kegelfläche mit der Achse des abzudichtenden Maschinenelements begrenzt, höchstens 10° kleiner ist als der zweite Kegelwinkel, den die axial in Richtung des abzudichtenden Raums angeordnete zweite Kegelfläche mit der Achse einschließt. Im Wesentlichen sind die beiden Kegelwinkel etwa gleich groß. Eine solche Ausgestaltung ist von Vorteil, um eine gute Schmierung der Dichtlippe zu gewährleisten. Der betriebsbedingte Verschleiß der Dichtlippe ist dadurch auf ein Minimum reduziert. Außerdem ist von Vorteil, dass dadurch die Länge des inneren Axialschenkels kurzgehalten und damit die durch den abzudichtenden Druck erzeugte Anpressung der Dichtmanschette an die Welle klein gehalten werden kann.

Ferner weist die erste Kegelfläche auf der dem Radialflansch des Stützrings axial zugewandten Seite einen Stützwulst auf, wobei das Verhältnis der Länge der ersten Kegelfläche zur Länge der zweiten Kegelfläche 0,3 bis 0,8 beträgt. Der Stützwulst ist insbesondere in Verbindung mit einer Kegelfläche von Vorteil, die einen vergleichsweise großen ersten Kegelenkel mit der Achse des abzudichtenden Maschihenelements einschließt und/oder mit abzudichtenden Drücken, die beispielsweise 3 bar überschreiten. Bei Druckbeaufschlagung der Dichtmanschette legt sich der Stützwulst an die dem abzudichtenden Raum zugewandte Seite der Stützfläche und verhindert dadurch, dass die Dichtlippe umklappt und sich die dem abzudichtenden Raum zugewandte zweite Kegelfläche eben auf die Oberfläche des abzudichtenden Maschinenelements anlegt und dadurch die Gebrauchseigenschaften des Dichtrings in erheblichem Maße negativ beeinflusst Die im Vergleich zur zweiten Kegelfläche kürzere und mit dem Stützwulst versehene erste Kegelfläche verhindert ein Umklappen der Dichtlippe.

Gemäß einer besonders vorteilhaften Ausgestaltung kann es vorgesehen sein, dass die Außenumfangsfläche und die Stirnseite dem Stützring jeweils mit Abstand benachbart zugeordnet und an diesen anlegbar sind. Einer solchen Ausgestaltung wird im Rahmen der vorliegenden Erfindung deshalb der Vorzug gegeben, weil ein derart ausgestalteter Dichtring die eingangs gestellte Aufgabe besonders gut löst. Speziell die Außenumfangsfläche, die einem Axialflansch des Stützrings mit radialem Abstand benachbart zugeordnet ist, wobei der radiale Abstand den radialen Federweg der Dichtlippe bildet, bewirkt die vorteilhaften Gebrauchseigenschaften, da durch die ausgezeichnete Flexibilität der Dichtlippe in radialer Richtung das Reibmoment und daraus resultierend die Wärmeentwicklung wesentlich reduziert wird und die Dichtlippe Exzentrizitäten und/oder Unwuchten des abzudichtenden Maschinenelements besonders gut zu folgen vermag.

Nach einer anderen Ausgestaltung besteht die Möglichkeit, dass die Außenumfangsfläche den Stützring anliegend berührt und dass nur die Stirnseite dem Stützring mit Abstand benachbart zugeordnet und an diesen anlegbar ist. Ein Dichtring, der derart gestaltet ist, weist zwar im Vergleich zu herkömmlichen Dichtringen durch die ungebundene Zuordnung des äußeren Axialschenkels zum Axialflansch des Stützrings günstigere Gebrauchseigenschaften auf, da die Flexibilität der Dichtlippe in radialer Richtung trotzdem höher ist, als wenn die Dichtlippe in unmittelbarer Nähe des Versteifungsrings angeordnet und mit diesem vulkanisiert ist, jedoch ist die Flexibilität der Dichtlippe in radialer Richtung eingeschränkt, gegenüber der ersten Ausgestaltung, die zuvor beschrieben wurde.

Die Außenumfangsfläche des Dichtrings kann den Stützring anliegend berühren.

Der Versteifungsring und der Stützring können jeweils separat erzeugt und kraft- und/oder formschlüssig miteinander verbunden sein. Hierbei ist von Vorteil, dass der Werkstoff des Versteifungsrings und der Werkstoff des Stützrings den jeweiligen Gegebenheiten des Anwendungsfalles besonders gut angepasst werden können. Beispielsweise besteht die Möglichkeit, den Versteifungsring aus einem metallischen Werkstoff herzustellen, beispielsweise als tiefgezogenen Winkelring, der sich einfach und kostengünstig, beispielsweise durch Vulkanisation, mit dem elastomeren Werkstoff der Dichtmanschette verbinden lässt. Der Stützring kann aus einem polymeren Werkstoff bestehen, z.B. aus einem PTFE-Compound, und mit seinem Axialflansch in den Versteifungsring eingepresst sein. Ein solcher Stützring hätte den Vorteil, dass auch bei hoher Druckbeaufschlagung des Dichtrings und/oder großen Exzentrizitäten und/oder Unwuchten des abzudichtenden Maschinenelements eine einwandfreie Relativbeweglichkeit der Dichtmanschette bezogen auf den Stützring aus reibungsverringerndem Werkstoff erhalten bliebe. Der Versteifungsring kann auch an seiner sich axial erstreckenden Innenfläche mit Elastomer überzogen sein. Dies hat den Vorteil, dass größere Radial-Toleranzen sowohl des Versteifungs- als auch des Stützrings akzeptabel sind und die Ringe dadurch kostengünstiger herstellbar sind.

Stützringe aus polymerem Werkstoff weisen außerdem, im Vergleich zu entsprechend gestalteten Stützringen aus metallischen Werkstoffen, eine vergleichsweise geringere Masse auf, was für manche Anwendungsfälle von Vorteil ist.

Durch die zweistückige Ausgestaltung von Versteifungsring und Stützring können beispielsweise auch komplizierte Formen der Ringe herstellbar sein, die einstückig nicht realisierbar wären.

Nach einer anderen Ausgestaltung besteht die Möglichkeit, dass der Versteifungsring und der Stützring einstückig ineinander übergehend und materialeinheitlich ausgebildet sind. Hierbei ist von Vorteil, dass die Montage des Dichtrings durch eine solche Ausgestaltung vereinfacht wird, ebenso wie das Recycling nach einem Austausch des Dichtrings, beispielsweise wegen betriebsbedingtem Verschleiß.

Der innere Axialschenkel kann radial außenseitig von einer Ringwendelfeder umschlossen sein, zur Erhöhung des Anpressdrucks der Dichtlippe auf die Oberfläche des abzudichtenden Maschinenelements. Außerdem kann zum Ausgleich des Spannungsrelaxationsverhaltens von Elastomeren die Ringwendelfeder zur Anwendung gelangen. Insbesondere zur Abdichtung geringer Drücke im Bereich von bis zu 3 bar ist die Verwendung einer Ringwendelfeder von Vorteil, da der geringe Druck innerhalb des abzudichtenden Raums nicht immer ausreicht, eine dichtende Anpressung der Dichtlippe an der Oberfläche des abzudichtenden Maschinenelements auch bei hoher dynamischer Wellenexzentrizität und hoher Wellendrehzahl zu bewirken.

Der äußere Axialschenkel und/oder der Radialschenkel und/oder der Stützring weisen auf den einander zugewandten Seiten bevorzugt eine reibungsverringernde Oberflächenbeschichtung auf. Die Oberflächenbeschichtung kann beispielsweise durch eine PTFE-Folie oder durch einen Lack gebildet sein. Bei Beaufschlagung der Dichtmanschette mit Drücken, die beispielsweise größer sind als 1 bar, legt sich der Radialschenkel auf der dem abzudichtenden Raum axial abgewandten Seite an den Radialflansch des Stützrings an und stützt sich gegenüber diesem ab. Steigt der Druck innerhalb des abzudichtenden Raums weiter an, legt sich auch die Außenumfangsfläche des radial äußeren Schenkels, unter der Voraussetzung, dass sie vorher dem Axialflansch des Stützrings mit radialem Abstand benachbart zugeordnet war, an den Axialflansch an. Durch die reibungsverringernde Oberflächenbeschichtung sind die Dichtmanschette und der Stützring auch dann relativ zueinander beweglich, wenn sich innerhalb des abzudichtenden Raums Druckänderungen ergeben und/oder die Dichtmanschette Exzentrizitäten und/oder Unwuchten des abzudichtenden Maschinenelements ausgleichen muß. Besteht der Stützring nicht aus einem reibungsverringernden Werkstoff, beispielsweise einem PTFE-Compound oder einem Thermoplast, sondern aus einem metallischen Werkstoff, ist es in fertigungstechnischer Hinsicht einfacher, die reibungsverringernde Oberflächenbeschichtung auf den Stützring aufzubringen, als auf den elastomeren Werkstoff der Dichtmanschette.

Die Beschichtung des Stützrings bietet weiterhin den Vorteil, dass Oberflächenrauigkeiten des Stützrings keinen Einfluss auf die Haftung der Dichtmanschette haben. Bei der Ausgestaltung einer Oberflächenbeschichtung für die Dichtmanschette ist vorteilhaft, dass beispielsweise eine PTFE-Folie bereits ins Formgebungswerkzeug der Dichtmanschette eingelegt und beim Formgebungsprozess anvulkanisiert werden kann.

Bevorzugt ist der Stützring als Winkelring ausgebildet und weist einen Radial-und einen Axialflansch auf, die als Widerlager für den Radialschenkel und den radial äußeren Axialschenkel der Dichtmanschette dienen.

Der Stützwulst kann einstückig ineinander übergehend und materialeinheitlich mit der Dichtmanschette ausgebildet sein. Durch diese einfache Ausgestaltung weist der Dichtring einen einfachen und teilearmen Aufbau auf und ist einfach und kostengünstig herstellbar.

Nach einer anderen Ausgestaltung kann der Stützwulst durch einen separat erzeugten Back-Up-Ring gebildet sein, der kraft- und/oder formschlüssig mit der Dichtmanschette verbunden ist. Der Back-Up-Ring kann beispielsweise aus einem PTFE-Compound bestehen. Bevorzugt ist der Back-Up-Ring ungebunden in eine Hinterschneidung der ersten Kegelfläche eingeschnappt, d.h. formschlüssig verbunden. Davon abweichend besteht jedoch auch die Möglichkeit, dass der Back-Up-Ring nur kraftschlüssig mit der Dichtmanschette verbunden ist oder dieser gebunden zugeordnet ist. Der Back-Up-Ring verhindert eine Extrusion des Elastomerwerkstoffs der Dichtlippe vom abzudichtenden Raum mit vergleichsweise höherem Druck in Richtung der Umgebung mit vergleichsweise niedrigerem Druck. Die radiale Höhe des Back-Up-Rings überdeckt in radialer Richtung den radial innenseitigen Abschluss des Radialflanschs des Stützrings und ist der Oberfläche des abzudichtenden Maschinenelements während der bestimmungsgemäßen Verwendung des Dichtrings bis auf einen geringen radialen Abstand benachbart zugeordnet.

Die Dichtlippe kann im herstellungsbedingten Zustand des Dichtrings mit der Oberfläche des abzudichtenden Maschinenelements, im längsseitigen Halbschnitt des Dichtrings betrachtet, eine Überdeckung aufweisen, die kleiner ist als der dem radialen Abstand entsprechende radiale Federweg des äußeren Axialschenkels zwischen dessen Außenumfangsfläche und dem radial außen benachbart angrenzenden Axialflansch des Stützrings. Derartige Parameter sind vorteilhaft, um stets einen Federweg der Dichtlippe in radialer Richtung auch im eingebauten Zustand des Dichtrings sicherzustellen.

Der Stützring kann einen Bestandteil eines Gehäuseverschlussdeckels bilden. Durch eine solche Ausgestaltung wird der Dichtring weiter vereinfacht; demgegenüber wird die Herstellung des Gehäuseverschlussdeckels durch seine kompliziertere Gestalt in fertigungstechnischer Hinsicht aufwendiger und dadurch teurer.

### Kurzbeschreibung der Zeichnung

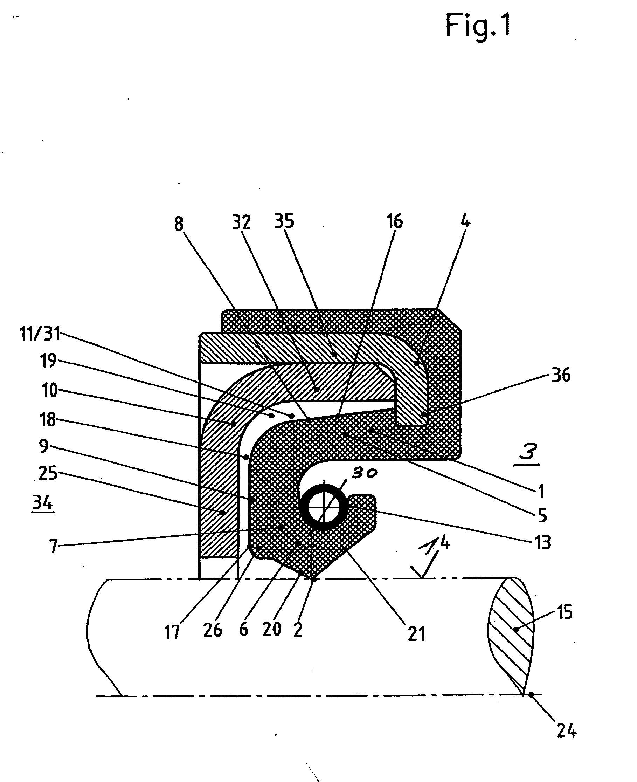

Dreizehn Ausführungsbeispiele des erfindungsgemäßen Dichtrings werden nachfolgend anhand der schematisch dargestellten Figuren 1 bis 13 näher beschrieben.

In den Figuren 1 bis 13 ist jeweils ein Ausführungsbeispiel eines Dichtrings gezeigt, wobei jeder der Dichtringe eine Dichtmanschette 1 aus elastomerem Werkstoff mit einer Dichtlippe 2 umfasst. Die Dichtringe sind im herstellungsbedingten nicht-eingebauten Zustand gezeigt, wobei das abzudichtende Maschinenelement 15 als Welle ausgebildet und in strichzwei-punktierter Darstellung gezeigt ist. Die Abdichtung des abzudichtenden Raums 3 erfolgt dadurch, dass die Dichtlippe 2 die Oberfläche 14 des abzudichtenden Maschinenelements 15 mit radialer Vorspannung dichtend umschließt. Innerhalb des abzudichtenden Raums 3 herrscht gegenüber der Umgebung 34 der vergleichsweise höhere Druck. Die mittelachse das abzudichtenden Maschinen elements ist mit 24 bezeichnet.

Die Dichtmanschette 1 ist mit dem aus einem zähharten Werkstoff bestehenden Versteifungsring 4 verbunden, der in den hier dargestellten Ausführungsbeispielen jeweils als tiefgezogener Winkelring ausgebildet ist und aus metallischem Werkstoff besteht.

Die Dichtmanschette 1 ist, im Länggschnitt des Dichtrings betrachtet, im Wesentlichen C-förmig ausgebildet und axial in Richtung des abzudichtenden Raums 3 offen. Die Dichtmanschette umfasst einen radial äußeren Axialschenkel 5 und einen radial inneren Axialschenkel 6, wobei die beiden Axialschenkel 5, 6 auf der dem abzudichtenden Raum 3 abgewandten Seite durch den Radialschenkel 7 verbunden sind. Von entscheidender Wichtigkeit ist, dass der äußere Axialschenkel 5 nur auf der dem abzudichtenden Raum 3 axial zugewandten Seite mit dem Versteifungsring 4 verbunden ist und dass die Außenumfangsfläche 8 des äußeren Axialschenkels 5 und die dem abzudichtenden Raum 3 axial abgewandte Stirnseite 9 des Radialschenkels 7 dem Stützring 10 jeweils ungehaftet zugeordnet sind. Nur durch eine derartige Ausgestaltung ist die Dichtlippe 2 in radialer Richtung besonders flexibel, um Exzentrizitäten und/oder Unwuchten des abzudichtenden Maschinenelements 15 auszugleichen. Außerdem wird das Reibmoment durch eine derartige Ausgestaltung verringert. Die Wärmeentwickung im Bereich der Dichtlippe 2 ist dadurch auf ein Minimum begrenzt.

Die zuvor beschriebene ungehaftete Zuordnung zwischen der Außenumfangsfläche 8 des äußeren Axialschenkels 5 und der dem abzudichtenden Raum 3 axial abgewandten Stirnseite 9 des Radialschenkels 7 am Stützring 10 ist bei allen hier gezeigten Ausführungsbeispielen gleich, wobei in den Figuren 1 und 3 bis 13 Dichtringe gezeigt sind, deren Außenumfangsfläche 8 und Stirnseite 9 dem Stützring 10 jeweils mit Abstand 11, 12 benachbart zugeordnet sind. Die Außenumfangsfläche 8 und die Stirnseite 9 sind bei entsprechendem Überdruck innerhalb des abzudichtenden Raums und/oder Exzentrizitäten und/oder Unwuchten des abzudichtenden Maschinenelements 15 an den Stützring 10 anlegbar.

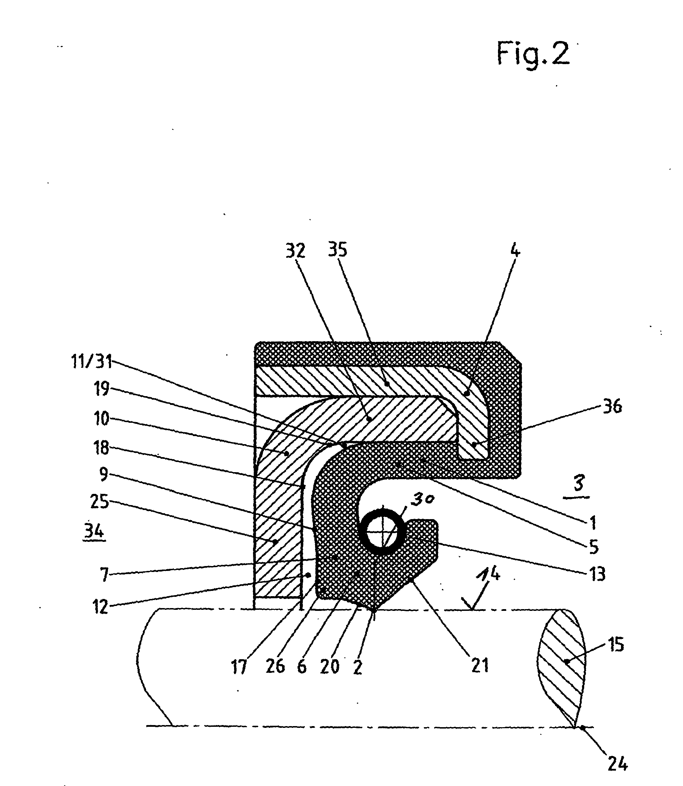

In Figur 2 ist ein Ausführungsbeispiel gezeigt, das diesbezüglich abweichend gestaltet ist. Die Außenumfangsfläche 8 berührt den Stützring 10 anliegend und nur die Stirnseite 9 ist dem Stützring 10 mit Abstand 12 benachbart zugeordnet und an diesen anlegbar.

In jedem der gezeigten Ausführungsbeispiele Figuren 1 bis 13 besteht der Versteifungsring aus einem tiefgezogenen metallischen Werkstoff, mit einem Axialvorsprung 35 und einem Radialvorsprung 36, wobei die Dichtmanschette 1 um den Radialvorsprung 36 herumgeführt ist und den Axialvorsprung 35 radial außenseitig zumindest teilweise überdeckt. Dadurch besteht eine statische Abdichtung gegenüber dem Einbauraum des Dichtrings.

Der Stützring 10 ist mit seinem Axialflansch 32 in den Axialvorsprung 35 des Versteifungsrings 4 eingepresst und dadurch sicher in seiner Position gehalten.

In Figur 1 ist ein erstes Ausführungsbeispiel gezeigt. Der Stützring 10 ist auf seiner dem Axialschenkel 5 und dem Radialschenkel 7 der Dichtmanschette 1 zugewandten Seite 18 mit einer Oberflächenbeschichtung 19 versehen, die durch eine PTFE-Folie gebildet ist. Die Oberflächenbeschichtung 19 verhindert ein Anhaften des elastomeren Werkstoffs der Dichtmanschette 1 bei Druckentlastung, so dass die Dichtlippe 2 in der Lage ist, um ihre gelenkartige Anbindung am Radialvorsprung 36 zu federn.

In Figur 2 ist ein zweites Ausführungsbeispiel des Dichtrings gezeigt, das sich von den übrigen Ausführungsbeispielen dadurch unterscheidet, dass die Außenumfangsfläche 8 den Stützring unmittelbar anliegend berührt. Der Radialschenkel 7 ist dem Radialflansch 25 auf der dem abzudichtenden Raum 3 zugewandten Seite mit axialem Abstand benachbart zugeordnet. Bei Druckbeaufschlagung stützt sich der Radialschenkel 7 am Radialflansch 25 ab.

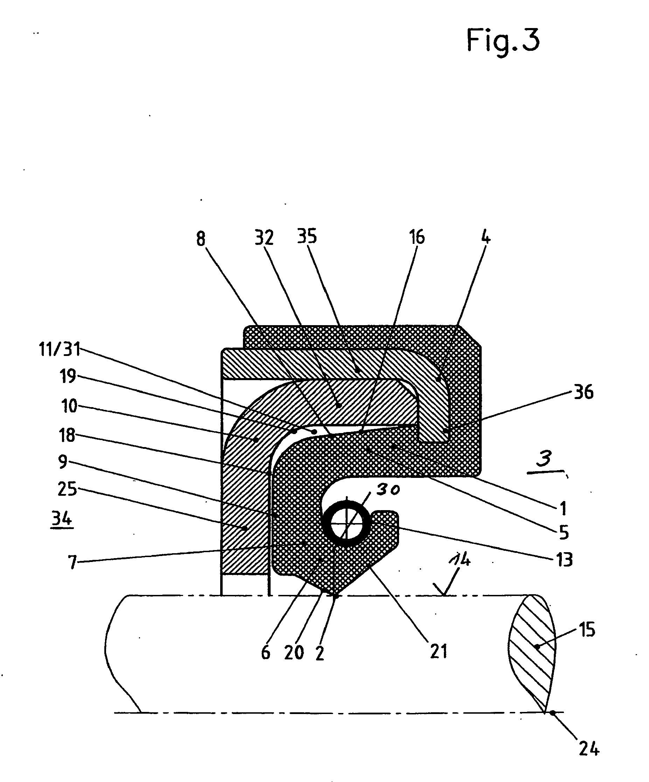

In Figur 3 ist ein drittes Ausführungsbeispiel gezeigt, bei dem ein Stützring 10 aus polymerem Werkstoff zur Anwendung gelangt. Der Stützring 10 besteht aus einem reibungsarmen Polyamid und ist in einem Spritzverfahren herstellbar. Durch die Verwendung des polymeren Werkstoffs als Material für den Stützring 10 sind bedarfsweise komplizierte Geometrien realisierbar. Dadurch, dass der Stützring 10 aus einem reibungsarmen Polyamid besteht, ist das Aufbringen einer separat erzeugten, reibungsverringernden Oberflächenbeschichtung entbehrlich.

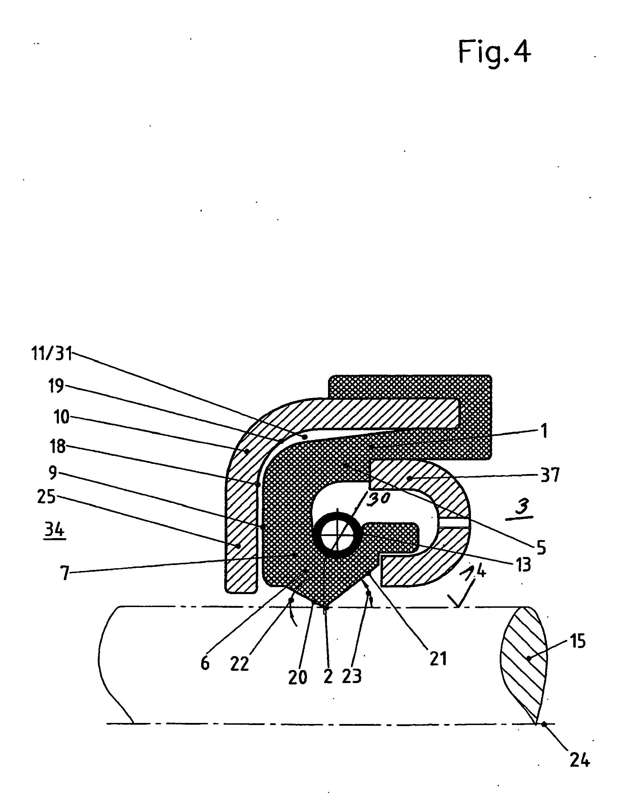

In Figur 4 ist ein viertes Ausführungsbeispiel eines Dichtrings gezeigt, bei dem der Versteifungsring 4 und der Stützring 10 einstückig ineinander übergehend und materialeinheitlich ausgebildet sind. Zusätzlich ist auf der dem abzudichtenden Raum 3 zugewandten Seite ein weiterer Stützring 37 vorgesehen, der die Aufgabe hat, ein Abkippen der Dichtlippe 2 bei zu hohem Druck und bei unsachgemäßer Montage zu verhindern. Unter unsachgemäßer Montage wird in diesem Zusammenhang verstanden, wenn das abzudichtende Maschinenelement 15 in diesem Ausführungsbeispiel von links in den Dichtring eingeführt wird; die korrekte Montage müßte, wie in den übrigen Ausführungsbeispielen auch, von rechts erfolgen.

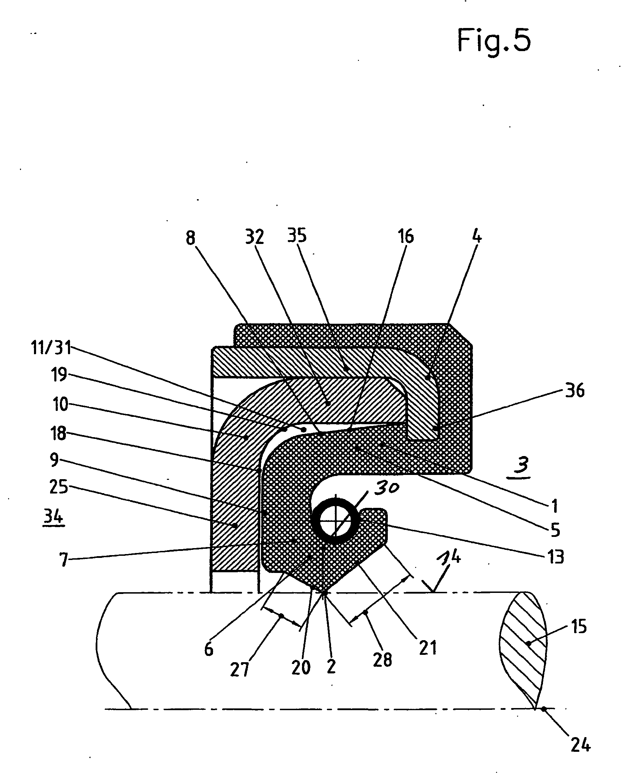

In Figur 5 ist ein Ausführungsbeispiel gezeigt, ähnlich dem Ausführungsbeispiel aus Figur 3, wobei der Stützring 10 aus einem metallischen Werkstoff besteht.

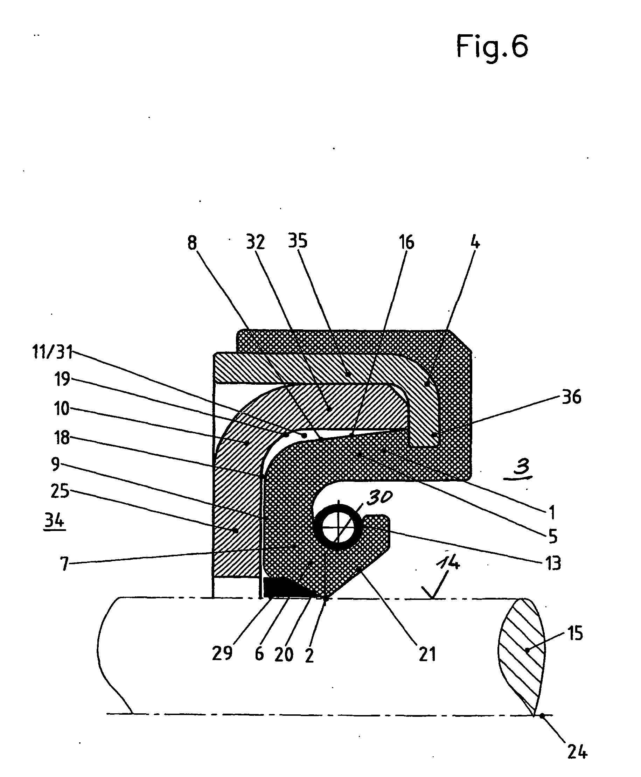

In Figur 6 ist ein sechstes Ausführungsbeispiel gezeigt. Auf der dem abzudichtenden Raum 3 abgewandten Seite der Dichtlippe 2 ist ein Stützwulst 26 in Form eines Back-Up-Rings 29 vorgesehen, der verhindert, dass der elastomere Werkstoff, aus dem die Dichtlippe 2 besteht, bei höheren Drücken innerhalb des abzudichtenden Raums, in den Dichtspalt extrudiert. Außerdem hat der Back-Up-Ring die zusätzliche Aufgabe, die Dichtung vor Verschleiß zu schützen und ein Umklappen der Dichtlippe 2 derart, dass sich die dem abzudichtenden Raum 3 zugewandte zweite Kegelfläche 21 auf die Oberfläche 14 des abzudichtenden Maschinenelements 15 legt, zu verhindern.

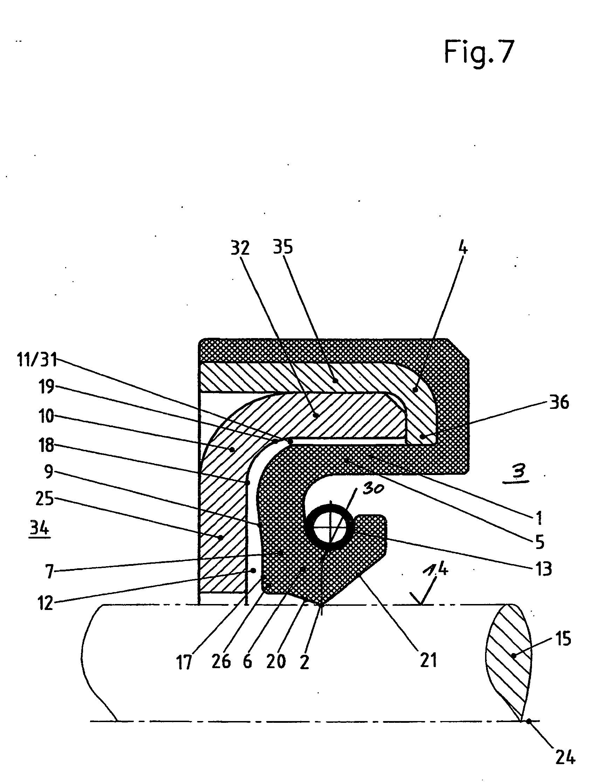

In Figur 7 ist ein siebtes Ausführungsbeispiel des Dichtrings gezeigt. Der radiale Abstand 11 zwischen der Außenumfangsfläche 8 des radial äußeren Axialschenkels 5 und dem Axialflansch 32 des Stützrings 10 ist, in axialer Richtung betrachtet, gleichbleibend. Bei einer derartigen Ausgestaltung ist von Vorteil, dass die Werkzeuge, die zur Herstellung des Dichtrings benötigt werden, in ihrer Herstellung einfach und daher kostengünstig sind.

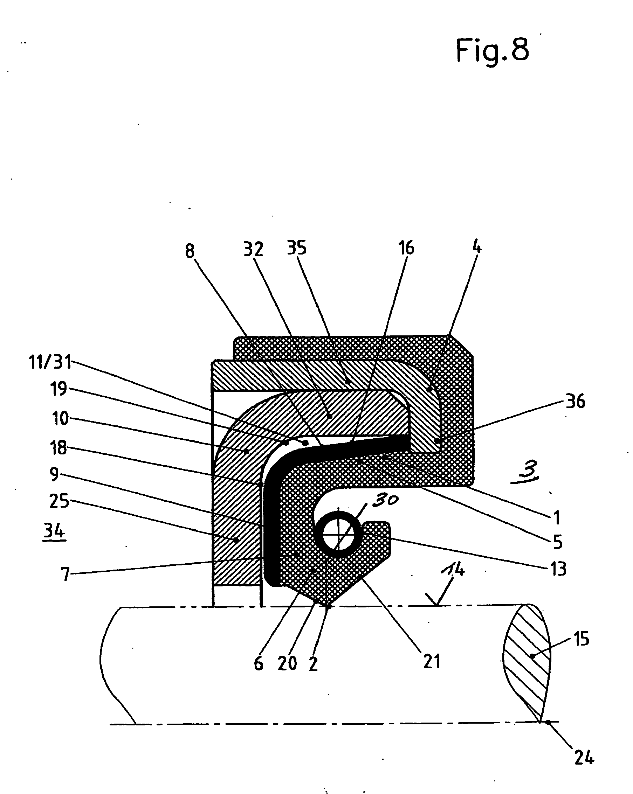

In Figur 8 ist ein achtes Ausführungsbeispiel des Dichtrings gezeigt. Im Gegensatz zum Ausführungsbeispiel aus Figur 7 ist der radiale Abstand 11 entlang der axialen Erstreckung des radial äußeren Axialschenkels nicht gleichbleibend, sondern nimmt, in axialer Richtung vom Radialschenkel 7 in Richtung des Radialvorsprungs 36 betrachtet, kontinuierlich ab, wie in fast allen übrigen Ausführungsbeispielen auch. Ausgehend vom Radialvorsprung 36 legt sich die Außenumfangsfläche 8, in axialer Richtung betrachtet, allmählich an den Axialflansch 32 des Stützrings 10 an. Lokale Spannungskonzentrationen werden vermieden.

In diesem Ausführungsbeispiel sind die Seiten 16, 17 des radial äußeren Schenkels 5 und des Radialschenkels 7 mit einer einstückig ineinander übergehenden, reibungsverringernden Oberflächenbeschichtung versehen, wobei die Oberflächenbeschichtung als PTFE-Folie ausgebildet ist.

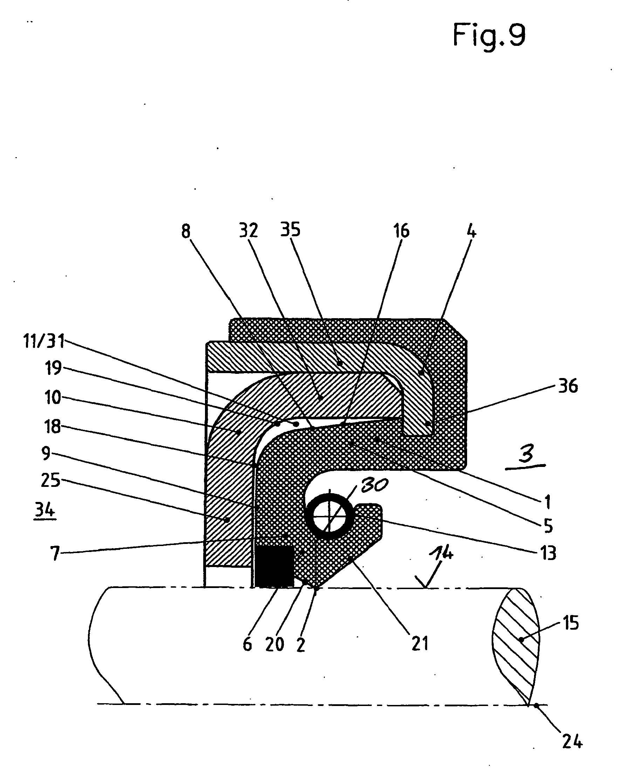

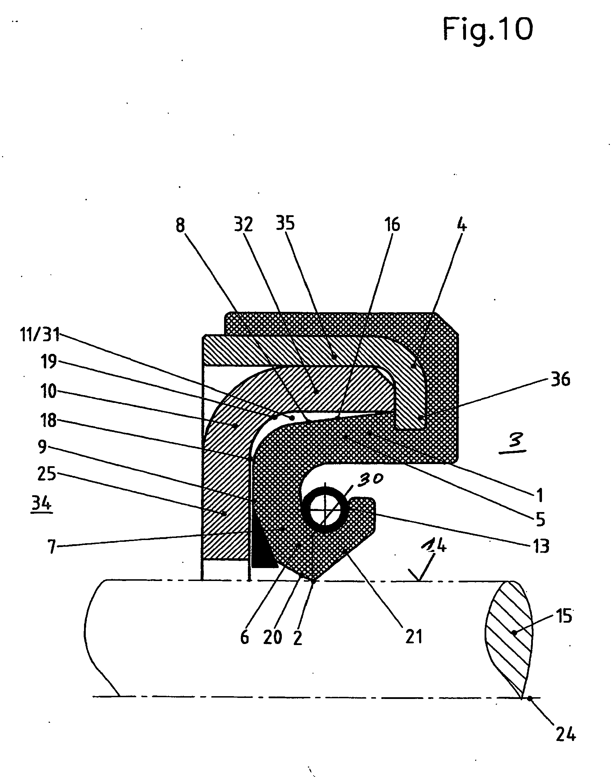

In den Figuren 9 und 10 ist jeweils ein Ausführungsbeispiel gezeigt, das im Wesentlichen dem Ausführungsbeispiel aus Figur 6 entspricht, wobei die als Stützwulst 26 zur Anwendung gelangenden Back-Up-Ringe 29 unterschiedlich gestaltet sind.

In Figur 9 ist der Back-Up-Ring 29 rechteckig gestaltet und verhindert ein Extrudieren der Dichtlippe 2 in den Dichtspalt sowie ein Abkippen der Dichtlippe in Richtung der Umgebung 34. Die rechteckige Geometrie des Back-Up-Rings 29 läßt sich kostengünstig und prozesssicher herstellen.

In Figur 10 ist der Back-Up-Ring 29 keilförmig gestaltet und besteht ebenfalls aus einem polymeren Werkstoff, der gute Abriebs- und Festigkeitseigenschaften aufweist. Der Back-Up-Ring 29 umschließt auch bei geringen Betriebsdrücken die Oberfläche 14 des abzudichtenden Maschinenelements 15 mit radialem Abstand, wodurch das Reibmoment insgesamt nur sehr gering ist, ebenso wie die aus der Reibung resultierende Wärmeentwicklung. Bei höheren Systemdrücken innerhalb des abzudichtenden Raums verhindert auch dieser Back-Up-Ring 29 die Extrusion von elastomerem Werkstoff der Dichtmanschette 1 in Richtung der Umgebung.

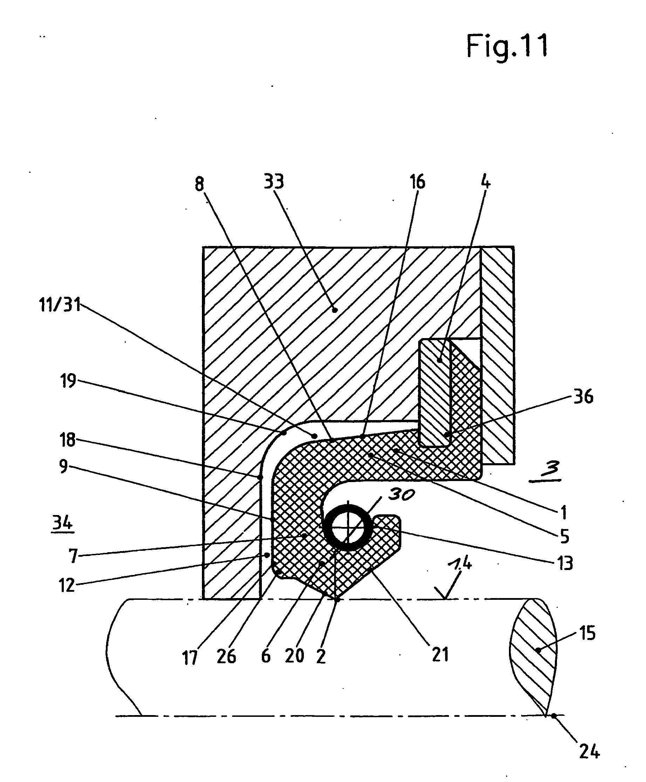

In Figur 11 ist ein elftes Ausführungsbeispiel gezeigt, bei dem der Stützring 10 einen Bestandteil eines Gehäuseverschlussdeckels 33 bildet.

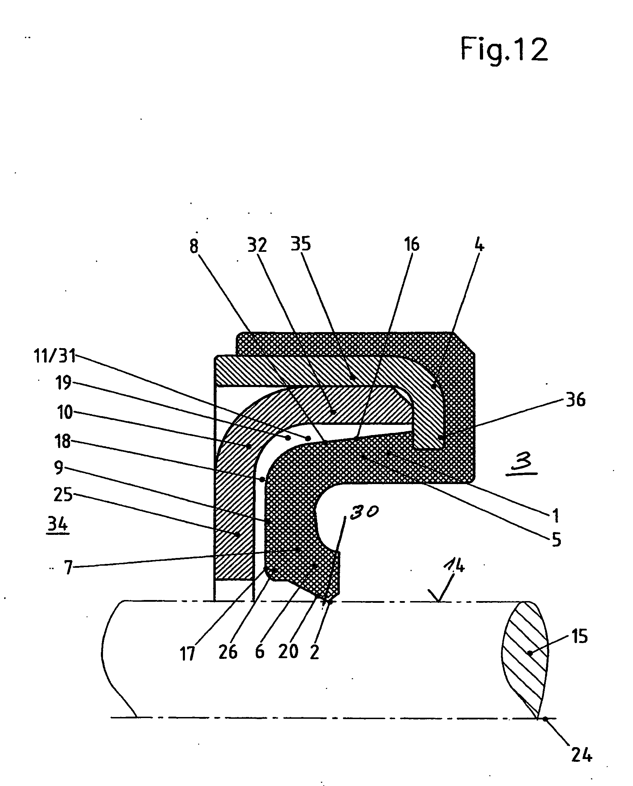

In Figur 12 ist ein Ausführungsbeispiel eines Dichtrings gezeigt, ähnlich den zuvor beschriebenen Ausführungsbeispielen, wobei jedoch keine Ringwendelfeder 13 zur Anwendung gelangt. Diese Variante hat den Vorteil, dass die Dichtung geringere Radialkräfte im drucklosen Betrieb erzeugt, da die initiale Anpresskraft lediglich durch die Überdeckung der Dichtlippe 2 mit der Oberfläche 14 des abzudichtenden Maschinenelements 15 zustande kommt. Insgesamt weist die Dichtlippe dadurch einen geringeren Verschleiß und einen verbesserten Wirkungsgrad auf.

In allen gezeigten Ausführungsbeispielen erscheinen der erste Kegelwinkel 22 und der zweite Kegelwinkel 23 im Wesentlichen gleich groß. Die Dichtlippe 2 wird in jedem der Ausführungsbeispiele durch zwei einander durchschneidende Kegelflächen 20, 21 gebildet, wobei der erste Kegelwinkel 22, den die dem abzudichtenden Raum zugewandte erste Kegelfläche 20 mit der Achse 24 des abzudichtenden Maschinenelements 15 begrenzt, höchstens 10° kleiner ist als der zweite Kegelwinkel 23, den die axial in Richtung des abzudichtenden Raums 3 angeordnete zweite Kegelfläche 21 mit der Achse 24 einschließt.

Durch die Anordnung des Stützwulstes 26, der teilweise als Back-Up-Ring 29 ausgebildet ist, ist das Verhältnis der Länge 27 der ersten Kegelfläche 20 zur Länge 28 der zweiten Kegelfläche 21 in den hier gezeigten Ausführungsbeispielen 0,3 bis 0,8.

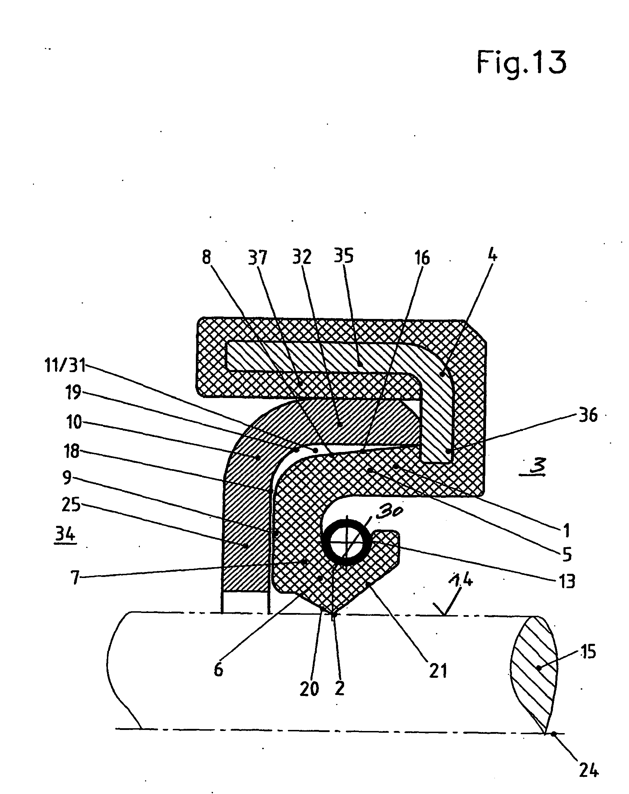

In Figur 13 ist ein Ausführungsbeispiel gezeigt, bei dem der Axialvorsprung 35 auf seiner Innenseite mit Elastomer 37 überzogen ist. Dies hat den Vorteil, dass größere Radial-Toleranzen sowohl des Versteifungsrings 4 als auch des Stützrings 10 ohne nachteilige Auswirkungen sind, wobei die Ringe 4, 10 dadurch kostengünstiger herstellbar sind.

In den hier gezeigten Ausführungsbeispielen weist die Dichtlippe 2 im herstellungsbedingten Zustand des Dichtrings mit der Oberfläche 14 des abzudichtenden Maschinenelements 15, im längsseitigen Halbschnitt des Dichtrings betrachtet, eine Überdeckung 30 auf, die kleiner ist, als der dem radialen Abstand 11 entsprechende radiale Federweg 31 des äußeren Axialschenkels 5 zwischen dessen Außenumfangsfläche 8 und dem radial außen benachbart angrenzenden Axialflansch 32 des Stützrings 10. Dies gilt für alle Ausführungsbeispiele mit Ausnahme des Ausführungsbeispiels aus Figur 2, bei dem ein radialer Federweg nicht vorgesehen ist. Durch das beschriebene Verhältnis zwischen der Überdeckung 30 und dem radialen Abstand 11/dem entsprechenden Federweg 31 ist sichergestellt, dass ein radialer Federweg 31 auch dann erhalten bleibt, wenn der Dichtring und das abzudichtende Maschinenelement miteinander montiert sind.

## Patentansprüche

1. Dichtring, umfassend eine Dichtmanschette (1) aus elastomerem Werkstoff mit zumindest einer Dichtlippe (2) zur Abdichtung eines abzudichtenden Raums (3), wobei die Dichtmanschette (1) mit einem Versteifungsring (4) aus zähhartem Werkstoff verbunden ist, wobei die Dichtmanschette (1), im Längsschnitt des Dichtrings betrachtet, im Wesentlichen C-förmig ausgebildet und axial in Richtung des abzudichtenden Raums (3) offen ist, sowie einen radial äußeren (5) und eine radial inneren Axialschenkel (6), umfasst, die Axialschenkel (5, 6) auf der dem abzudichtenden Raum (3) axial abgewandten Seite durch einen Radialschenkel (7) verbunden sind, der äußere Axialschenkel (5) nur auf der dem abzudichtenden Raum (3) axial zugewandten Seite mit dem Versteifungsring (4) verbunden ist und die Außenumfangsfläche (8) des äußeren Axialschenkels (5) und die dem abzudichtenden Raum (3) axial abgewandte Stirnseite (9) des Radialschenkels (7) einem Stützring (10) ungehaftet zugeordnet sind, **dadurch gekennzeichnet, dass** die Dichtlippe (2) durch zwei einander durchschneidende Kegelflächen (20, 21) gebildet ist, der erste Kegelwinkel (22), den die dem abzudichtenden Raum abgewandte erste Kegelfläche (20) mit der Achse (24) des abzudichtenden Maschinenelements (15) begrenzt, höchstens 10° kleiner ist, als der zweite Kegelwinkel (23), den die axial in Richtung des abzudichtenden Raums (3) angeordnete zweite Kegelfläche (21) mit der Achse (24) einschließt, die erste Kegelfläche (20) auf der dem Radialflansch (25) des Stützrings (10) axial zugewandten Seite einen Stützwulst (26) aufweist, und dass das Verhältnis der Länge (27) der ersten Kegelfläche (20) zur Länge (28) der zweiten Kegelfläche (21) 0,3 bis 0,8 beträgt.

2. Dichtring nach Anspruch 1, **dadurch gekennzeichnet, dass** die Außenumfangsfläche (8) und die Stirnseite (9) dem Stützring (10) jeweils mit Abstand benachbart zugeordnet und an diesen anlegbar sind.

3. Dichtring nach Anspruch 1, **dadurch gekennzeichnet, dass** die Außenumfangsfläche (8) den Stützring (10) anliegend berührt und **dass** nur die Stirnseite (9) dem Stützring (10) mit Abstand (12) benachbart zugeordnet und an diesen anlegbar ist.

4. Dichtring nach einem der Ansprüche 1 bis 3, **dadurch gekennzeichnet, dass** der Versteifungsring (4) und der Stützring (10) jeweils separat erzeugt und kraft- und/oder formschlüssig miteinander verbunden sind.

5. Dichtring nach einem der Ansprüche 1 bis 4, **dadurch gekennzeichnet, dass** der Versteifungsring (4) und der Stützring (10) einstückig ineinander übergehend und materialeinheitlich ausgebildet sind.

6. Dichtring nach einem der Ansprüche 1 bis 5, **dadurch gekennzeichnet, dass** der Versteifungsring (4) und/oder der Stützring (10) aus einem metallischen Werkstoff bestehen.

7. Dichtring nach einem der Ansprüche 1 bis 6, **dadurch gekennzeichnet, dass** der Versteifungsring (4) und/oder der Stützring (10) aus einem polymeren Werkstoff bestehen.

8. Dichtring nach einem der Ansprüche 1 bis 7, **dadurch gekennzeichnet, dass** der innere Axialschenkel (6) radial außenseitig von einer Ringwendelfeder (13) umschlossen ist, zur Erhöhung des Anpressdrucks der Dichtlippe (2) auf die Oberfläche (14) des abzudichtenden Maschinenelements (15).

9. Dichtring nach einem der Ansprüche 1 bis 8, **dadurch gekennzeichnet, dass** der äußere Axialschenkel (5) und/oder der Radialschenkel (7) und/oder der Stützring (10) auf den einander zugewandten Seiten (16, 17, 18) eine reibungsverringernde Oberflächenbeschichtung (19) aufweisen.

10. Dichtring nach Anspruch 9, **dadurch gekennzeichnet, dass** die Oberflächenbeschichtung (19) durch eine PTFE-Folie gebildet ist.

11. Dichtring nach Anspruch 9, **dadurch gekennzeichnet, dass** die Oberflächenbeschichtung (19) durch einen Lack gebildet ist.

12. Dichtring nach einem der Ansprüche 1 bis 11, **dadurch gekennzeichnet, dass** der Stützring (10) als Winkelring ausgebildet ist und einen Radial- (25) und einen Axialflansch (32) aufweist.

13. Dichtring nach Anspruch 1, **dadurch gekennzeichnet, dass** der Stützwulst (26) einstückig ineinander übergehend und materialeinheitlich mit der Dichtmanschette (1) ausgebildet ist.

14. Dichtring nach Anspruch 1, **dadurch gekennzeichnet, dass** der Stützwulst (26) durch einen separat erzeugten Back-Up-Ring (29) gebildet ist, der kraft- und/oder formschlüssig mit der Dichtmanschette (1) verbunden ist.

15. Dichtring nach Anspruch 1, **dadurch gekennzeichnet, dass** der Stützwulst (26) durch einen separat erzeugten Back-Up-Ring (29) gebildet ist, der ungehaftet zwischen der Dichtmanschette (1) und dem Stützring (10) angeordnet ist.

16. Dichtring nach einem der Ansprüche 14 oder 15, **dadurch gekennzeichnet, dass** der Back-Up-Ring (29) aus einem PTFE-Compound besteht.

17. Dichtring nach einem der Ansprüche 2 und 4 bis 16, **dadurch gekennzeichnet, dass** die Dichtlippe (2), im herstellungsbedingten Zustand des Dichtrings, mit der Oberfläche (14) des abzudichtenden Maschinenelements (15), im längsseitigen Halbschnitt des Dichtrings betrachtet, eine Überdeckung (30) aufweist, die kleiner ist als der dem radialen Abstand (11) entsprechende radiale Federweg (31) des äußeren Axialschenkels (5) zwischen dessen Außenumfangsfläche (8) und dem radial außen benachbart angrenzenden Axialflansch (32) des Stützrings (10).

18. Dichtring nach einem der Ansprüche 1 bis 17, **dadurch gekennzeichnet, dass** der Stützring (10) einen Bestandteil eines Gehäuseverschlussdeckels (33) bildet.

## Claims

1. Sealing ring, comprising a sealing collar (1) which is made from elastomeric material and has at least one sealing lip (2) for sealing a space (3) which is to be sealed, the sealing collar (1) being connected to a reinforcing ring (4) which is made from hard and tough material, the sealing collar (1) being of substantially C-shaped configuration, as viewed in the longitudinal section of the sealing ring, and being open axially in the direction of the space (3) which is to be sealed, and comprising a radially outer axial limb (5) and a radially inner axial limb (6), the axial limbs (5, 6) being connected by a radial limb (7) on the side which faces axially away from the space (3) which is to be sealed, the outer axial limb (5) being connected to the reinforcing ring (4) only on the side which axially faces the space (3) which is to be sealed, and the outer circumferential face (8) of the outer axial limb (5) and that end side (9) of the radial limb (7) which faces axially away from the space (3) which is to be sealed being assigned to the supporting ring (10) without adhesion, **characterized in that** the sealing lip (2) is formed by two conical faces (20, 21) which intersect one another, the first cone angle (22) which the first conical face (20) which faces away from the space which is to be sealed delimits with the axis (24) of the machine element (15) which is to be sealed is at most 10° smaller than the second cone angle (23) which the second conical face (21) which is arranged axially in the direction of the space (3) which is to be sealed encloses with the axis (24), the first conical face (20) has a supporting bead (26) on the side which axially faces the radial flange (25) of the supporting ring (10), and **in that** the ratio of the length (27) of the first conical face (20) to the length (28) of the second conical face (21) is from 0.3 to 0.8.

2. Sealing ring according to Claim 1, **characterized in that** the outer circumferential face (8) and the end side (9) are assigned to the supporting ring (10) in an adjacent manner in each case with a spacing and can be positioned on the latter.

3. Sealing ring according to Claim 1, **characterized in that** the outer circumferential face (8) touches the supporting ring (10) in an abutting manner, and **in that** only the end side (9) is assigned to the supporting ring (10) in an adjacent manner at a spacing (12) and can be positioned on the latter.

4. Sealing ring according to one of Claims 1 to 3,
**characterized in that** the reinforcing ring (4) and the supporting ring (10) are produced in each case separately and are connected to one another in a force-transmitting and/or form-fitting manner.

5. Sealing ring according to one of Claims 1 to 4,
**characterized in that** the reinforcing ring (4) and the supporting ring (10) are configured so as to merge integrally into one another and from a uniform material.

6. Sealing ring according to one of Claims 1 to 5,
**characterized in that** the reinforcing ring (4) and/or the supporting ring (10) consist/consists of a metallic material.

7. Sealing ring according to one of Claims 1 to 6,
**characterized in that** the reinforcing ring (4) and/or the supporting ring (10) consist/consists of a polymeric material.

8. Sealing ring according to one of Claims 1 to 7,
**characterized in that** the inner axial limb (6) is enclosed radially on the outside by a ring coil spring (13), in order to increase the contact pressure of the sealing lip (2) on the surface (14) of the machine element (15) which is to be sealed.

9. Sealing ring according to one of Claims 1 to 8,
**characterized in that** the outer axial limb (5) and/or the radial limb (7) and/or the supporting ring (10) have/has a friction-reducing surface coating (19) on the sides (16, 17, 18) which face one another.

10. Sealing ring according to Claim 9, **characterized in that** the surface coating (19) is formed by a PTFE film.

11. Sealing ring according to Claim 9, **characterized in that** the surface coating (19) is formed by a varnish.

12. Sealing ring according to one of Claims 1 to 11,
**characterized in that** the supporting ring (10) is configured as an angle ring and has a radial flange (25) and an axial flange (32).

13. Sealing ring according to Claim 1, **characterized in that** the supporting bead (26) is configured with the sealing collar (1) so as to merge integrally into one another and from uniform material.

14. Sealing ring according to Claim 1, **characterized in that** the supporting bead (26) is formed by a separately produced back-up ring (29) which is connected to the sealing collar (1) in a force-transmitting and/or form-fitting manner.

15. Sealing ring according to Claim 1, **characterized in that** the supporting bead (26) is formed by a separately produced back-up ring (29) which is arranged without adhesion between the sealing collar (1) and the supporting ring (10).

16. Sealing ring according to either of Claims 14 and 15, **characterized in that** the back-up ring (29) consists of a PTFE compound.

17. Sealing ring according to one of Claims 2 and 4 to 16, **characterized in that** the sealing lip (2), in the state of the sealing ring as a result of manufacture, has an overlap (30) with the surface (14) of the machine element (15) which is to be sealed, as viewed in longitudinal-side half section of the sealing ring, which overlap (30) is smaller than the radial spring travel (31) of the outer axial limb (5) which corresponds to the radial spacing (11), between its outer circumferential face (8) and that axial flange (32) of the supporting ring (10) which is adjacent radially on the outside.

18. Sealing ring according to one of Claims 1 to 17,
**characterized in that** the supporting ring (10) forms a constituent part of the housing closure cover (33).

## Revendications

1. Bague d'étanchéité, comprenant une manchette d'étanchéité (1) en matériau élastomère pourvue d'au moins une lèvre d'étanchéité (2) pour étanchéifier un espace (3) à étanchéifier, dans laquelle la manchette d'étanchéité (1) est reliée à une bague de raidissement (4) en matériau dur, la manchette d'étanchéité (1), vue en coupe longitudinale de la bague d'étanchéité, étant réalisée sensiblement en forme de C et ouverte axialement en direction de l'espace à étanchéifier (3), ainsi qu'une branche axiale radialement extérieure (5) et une branche axiale radialement intérieure (6), les branches axiales (5, 6) sont reliées, du côté détourné axialement de l'espace à étanchéifier (3), par une branche radiale (7), la branche axiale extérieure (5) est reliée seulement du côté tourné axialement vers l'espace à étanchéifier (3) à la bague de raidissement (4) et la surface circonférentielle extérieure (8) de la branche axiale extérieure (5) et la face frontale (9) détournée axialement de l'espace à étanchéifier (3) de la branche radiale (7) sont associées sans adhérence à une bague de soutien (10), **caractérisée en ce que** la lèvre d'étanchéité (2) est constituée par deux surfaces coniques (20, 21) se recoupant, le premier angle conique (22) que limite la première surface conique (20) détournée de l'espace à étanchéifier par l'axe (24) de l'élément de machine à étanchéifier (15) est au plus inférieur de 10° au deuxième angle conique (23) que circonscrit la deuxième surface conique (21) disposée en direction de l'espace à étanchéifier (3) par l'axe (24), la première surface conique (20), du côté tourné axialement vers la bride radiale (25) de la bague de soutien (10), comporte un bourrelet de soutien (26), et **en ce que** le rapport entre la longueur (27) de la première surface conique (20) et la longueur (28) de la deuxième surface conique (21) va de 0,3 à 0,8.

2. Bague d'étanchéité selon la revendication 1,
**caractérisée en ce que** la surface circonférentielle extérieure (8) et la face frontale (9) sont chacune associées à distance proche à la bague de soutien (10) et peuvent être posées sur celle-ci.

3. Bague d'étanchéité selon la revendication 1,
**caractérisée en ce que** la surface circonférentielle extérieure (8) touche la bague de soutien (10) en s'appuyant dessus et **en ce que** seule la face frontale (9) est associée à la bague de soutien (10) à distance proche (12) et peut être posée sur celle-ci.

4. Bague d'étanchéité selon l'une quelconque des revendications 1 à 3, **caractérisée en ce que** la bague de raidissement (4) et la bague de soutien (10) sont fabriquées respectivement séparément et sont reliées entre elles par correspondance mécanique et/ou géométrique.

5. Bague d'étanchéité selon l'une quelconque des revendications 1 à 4, **caractérisée en ce que** la bague de raidissement (4) et la bague de soutien (10) sont réalisées en une pièce avec une transition mutuelle et dans une matière uniforme.

6. Bague d'étanchéité selon l'une quelconque des revendications 1 à 5, **caractérisée en ce que** la bague de raidissement (4) et/ou la bague de soutien (10) sont composées d'un matériau métallique.

7. Bague d'étanchéité selon l'une quelconque des revendications 1 à 6, **caractérisée en ce que** la bague de raidissement (4) et/ou la bague de soutien (10) sont composées d'un matériau polymère.

8. Bague d'étanchéité selon l'une quelconque des revendications 1 à 7, **caractérisée en ce que** la branche axiale intérieure (6) est entourée radialement à l'extérieur d'un ressort à hélice annulaire (13) pour augmenter la compression de la lèvre d'étanchéité (2) sur la surface (14) de l'élément de machine à étanchéifier (15).

9. Bague d'étanchéité selon l'une quelconque des revendications 1 à 8, **caractérisée en ce que** la branche axiale extérieure (5) et/ou la branche radiale (7) et/ou la bague de soutien (10) présentent, sur leurs côtés tournés les uns vers les autres (16, 17, 18), un revêtement de surface réducteur de frottement (19).

10. Bague d'étanchéité selon la revendication 9, **caractérisée en ce que** le revêtement de surface (19) est constitué par un film de PTFE.

11. Bague d'étanchéité selon la revendication 9,
**caractérisée en ce que** le revêtement de surface (19) est constitué par un vernis.

12. Bague d'étanchéité selon l'une quelconque des revendications 1 à 11, **caractérisée en ce que** la bague de soutien (10) est réalisée sous forme d'une bague angulaire et comporte une bride radiale (25) et une bride axiale (32).

13. Bague d'étanchéité selon la revendication 1, **caractérisée en ce que** le bourrelet de soutien (26) est réalisé en une pièce avec transition mutuelle et dans une matière uniforme avec la manchette d'étanchéité (1).

14. Bague d'étanchéité selon la revendication 1, **caractérisée en ce que** le bourrelet de soutien (26) est constitué par une bague d'appoint fabriquée séparément (29) qui est reliée par correspondance mécanique et/ou géométrique à la manchette d'étanchéité (1).

15. Bague d'étanchéité selon la revendication 1, **caractérisée en ce que** le bourrelet de soutien (26) est constitué par une bague d'appoint fabriquée séparément (29) qui est disposée sans adhérence entre la manchette d'étanchéité (1) et la bague de soutien (10).

16. Bague d'étanchéité selon l'une quelconque des revendications 14 ou 15, **caractérisée en ce que** la bague d'appoint (29) est faite d'un composite de PTFE.

17. Bague d'étanchéité selon l'une quelconque des revendications 2 et 4 à 16, **caractérisée en ce que** la lèvre d'étanchéité (2), en état lié à la fabrication de la bague d'étanchéité, vue avec la surface (14) de l'élément de machine à étanchéifier (15) en demi-coupe longitudinale de la bague d'étanchéité, comporte un recouvrement (30) qui est plus petit que la course de ressort radiale (31) correspondant à la distance radiale (11) de la branche axiale extérieure (5) entre sa surface circonférentielle extérieure (8) et la bride axiale (32) contiguë voisine radialement à l'extérieur de la bague de soutien (10).

18. Bague d'étanchéité selon l'une quelconque des revendications 1 à 17, **caractérisée en ce que** la bague de soutien (10) constitue une composante d'un couvercle obturateur de boîtier (33).
